# EUROPÄISCHE PATENTANMELDUNG

(11) **EP 2 447 461 A1**
(43) Veröffentlichungstag der Anmeldung: **02.05.2012**
(21) Anmeldenummer: 10189220.6
(22) Anmeldetag: 28.10.2010
(51) Int. Cl.: E06B 9/70, F16H 37/04

(54) **Antriebssystem für Wickelelemente von Sonnenschutz- und Sicherungseinrichtungen**

(71) Anmelder: ProVita Verwaltung GmbH, 63584 Gruendau (DE)
(72) Erfinder: Lott, Oswald, 63584 Gründau (DE); Müller, Wolfgang J., 6890 Lustenau (AT); Grübel, Edwin, 9443 Widnau (CH)
(74) Vertreter: Staudt, Armin Walter

(57) **Zusammenfassung**

Bei einem bekannten Antriebssystem für Wickelelemente von Sonnenschutz- und Sicherungseinrichtungen, wie Rollläden, Markisen, Sonnenblenden, Rollgitter und dergleichen, steht ein um eine Abtriebsachse drehbares Wickelelement mit einem drehrichtungsumkehrbar betreibbaren elektrischen Motor über ein Untersetzungsgetriebe in Antriebsverbindung, welches ein Planetengetriebe mit Sonnenrad, innenverzahntem Hohlrad, dem die Abtriebsachse zugeordnet ist und mindestens einem in das Sonnenrad und das Hohlrad eingreifenden Planetenrad umfasst. Um dieses hinsichtlich Baugröße, einfacher Konstruktion, Sicherheit und niedrigen Fertigungskosten zu optimieren, wird erfindungsgemäß vorgeschlagen, dass das Untersetzungsgetriebe (10) ein mit dem Planetengetriebe (11,12,13,16) gekuppeltes Schneckengetriebe (7,8) aufweist, das eine in einer Antriebsachse (8) drehende Antriebsschnecke umfasst, die mit einem koaxial zur Abtriebsachse drehenden Schneckenrad (4) kämmt.

## Beschreibung

Die Erfindung betrifft ein Antriebssystem für Wickelelemente von Sonnenschutz- und Sicherungseinrichtungen, wie Rollläden, Markisen, Sonnenblenden, Rollgitter und dergleichen, wobei ein um eine Abtriebsachse drehbares Wickelelement mit einem drehrichtungsumkehrbar betreibbaren elektrischen Motor über ein Untersetzungsgetriebe in Antriebsverbindung steht, welches ein Planetengetriebe mit Sonnenrad, innenverzahntem Hohlrad, dem die Abtriebsachse zugeordnet ist, und mindestens einem in das Sonnenrad und das Hohlrad eingreifenden Planetenrad umfasst.

Auf- und abwickelbare Schließ- oder Schutzelemente, wie Rollläden, Markisen, Sonnenblenden, Rolltore und dergleichen dienen zum Verschließen von Fenster-, Tür- oder Toröffnungen. Sie sind mit Aufwickel- oder Raffeinrichtungen ausgestattet, die im Zuge der Automatisierung zunehmend elektrisch betrieben werden.

Verbreitet sind Antriebssysteme mit Gleichstrommotoren, die entweder an eine aufladbare Batterie oder über einen Transformator oder eine elektronische Gleichrichterschaltung an die Hausnetzspannung anschließbar sind. Gleichstrommotoren können mit hoher Drehzahl betrieben werden und sie haben ein großes Drehmoment beim Anlauf, was für den praktischen Einsatz vorteilhaft ist. Die hohe Drehzahl des Gleichstrommotors erfordert aber ein Untersetzungsgebetriebe mit einem großen Untersetzungsverhältnis von typischerweise 1:200 bis 1:600.

### Stand der Technik

Gängige Antriebssysteme lassen sich nach Art des Zusammenwirkens von Motor und der um ihre Längsachse rotierenden Wickelwalze zum Auf- und Abwickeln von Rollladenpanzer, Markisentuch und dergleichen unterscheiden.

Bei einem Antriebssystem mit einem so genannten Rohrmotor wird dieser in die Innenbohrung einer hohlzylindrischen Wickelwalze eingesetzt und treibt diese über ein Untersetzungsgetriebe und ein an das Innenprofil der Wickelwalze angepassten Mitnehmer direkt an. Ein derartiger Rollladenantrieb mit Rohrmotor und zweistufigem Planeten-Untersetzungsgetriebe ist beispielsweise aus der DE 10 2007 005 595 A1 bekannt.

Bei dem Planetengetriebe verlaufen Antriebswelle und Abtriebswelle koaxial zueinander und beanspruchen praktisch keinen zusätzlichen Raum außerhalb der Wickelwalze. Antrieb und Getriebe müssen jedoch mit dem radialen Platzangebot innerhalb der Wickelwalze auskommen, so dass zum Erreichen des erforderlichen Untersetzungsverhältnisses im Regelfall mehrere Getriebestufen hintereinander angeordnet sind, was aufwändige und filigrane Konstruktionen erfordert. Rohrmotor-Antriebe sind daher vergleichsweise komplex und teuer.

Ein anderes Antriebssystem mit Direktantrieb der Wickelwalze ist in der
WO 2008/006758 A1 beschrieben. Der dort vorgeschlagene Antrieb greift an einer Stirnseite der Wickelwalze an und ist in einem innerhalb des Rollladenkastens verdrehsicher gelagerten Gehäuse untergebracht.

Da zwischen der Wickelwalze und deren Wandlager nur ein schmaler Spalt mit einer Breite von typischerweise weniger als 30 mm zur Verfügung steht, besteht eine Anforderung an einen derartigen Antrieb darin, die Unterbringung der Antriebseinheit einschließlich Motor und Untersetzungsgetriebe ohne bauliche Änderung zu ermöglichen und gleichzeitig eine ausreichend hohe Zugleistung zur Verfügung zu stellen. Das Untersetzungsgetriebe umfasst ein selbsthemmendes Schneckengetriebe und ein besonders großes Antriebszahnrad, um so eine Rotation der Wickelwalze mit einem günstigen Hebelverhältnis zu bewerkstelligen.

Ein weiteres Antriebssystem ist insbesondere bei Rollläden und dergleichen verbreitet, bei denen die Wickelwalze über ein Zugelement betätigt wird, etwa einem Rollladengurt, das auf eine Gurthaspel aufgewickelt wird. Zum Auf- und Abwickeln des Zugelements werden elektrische Gurtwickler oder Gurtantriebe - häufig auch zur Nachrüstung manuell zu bedienender Einrichtungen - eingesetzt.

Ein elektrischer Gurtwickler dieser Art ist in der DE 10 2004 012 354 C5 beschrieben. Er besteht im Wesentlichen aus einem Gehäuse, in dem ein Elektromotor, die Gurthaspel sowie ein Untersetzungsgetriebe Platz finden. Das Untersetzungsgetriebe setzt sich aus einem Schneckenrad- und einem Stirnradgetriebe zusammen, wobei eine der Getriebeverbindungen durch einen Zahnriemen gebildet wird. Das Gehäuse ist von einer abnehmbaren Gehäuse-Abdeckung verschlossen, die Bedienelemente für die Motorsteuerung trägt.

Ein weiterer Gurtwickler dieser Art und ein Antriebssystem der eingangs genannten Gattung ist aus der DE 36 36 855 A1 bekannt. Hierbei wird mindestens ein Teil des Untersetzungsgetriebes von einem Planetengetriebe gebildet, das innerhalb eines Getriebegehäuses angeordnet ist. Das Planetengetriebe ist aus einem Hohlrad, einem im Hohlrad angeordneten Planetenradträger mit Planetenrädern und einem im Mittelpunkt des Planetenradträgers angeordneten Sonnenrad zusammengesetzt. Von den genannten Bauteilen sind jeweils zwei Bauteile gegenüber dem Getriebegehäuse drehbar, und eines ist gegenüber dem Gehäuse feststehend, wobei die Antriebswelle und die Abtriebswelle jeweils mit einem der drehbaren Bauteile gekuppelt sind.

Aus Platzgründen wird hierbei eine gewinkelte Anordnung von Motorachse und Getriebe angestrebt, bei der Antriebswelle und Abtriebswelle in derselben Ebene aber senkrecht zueinander verlaufen. Die entsprechende Umlenkung des Kraftflussweges erfolgt bevorzugt dadurch, dass das Sonnenrad drehfest und koaxial mit einem Kegelrad verbunden ist, das mit einem Antriebsritzel der Antriebsachse kämmt. Hierzu ist das Getriebegehäuse mit einer Öffnung versehen, durch die das Antriebsritzel des Motors auf das Kegelrad hineinragt.

Planetengetriebe weisen bei gleichem Untersetzungsverhältnis in der Regel einen geringeren Raumbedarf als Stirnradgetriebe auf. Durch den Einsatz eines zusätzlichen Kegelrades zur Umlenkung des Kraftflussweges im Planetengetriebe ergibt sich bei dem bekannten Gurtwickler ein zusätzlicher Beitrag zur Untersetzung.

### Technische Aufgabenstellung

Die vorliegende Erfindung betrifft insbesondere eine Weiterbildung der beiden zuletzt erläuterten Antriebssysteme mit Gurtwickler und direktem Antrieb einer Wickelwalze über ein seitlich angreifendes Antriebssystem. Dabei stellt sich grundsätzlich die Aufgabe, die zum Heben des Behangs (Rollladenpanzer, Markisentuch und dergleichen) erforderliche Leistung auf engem Raum mit möglichst geringem konstruktivem Aufwand für Motor und Getriebe zuverlässig bereitzustellen. Daneben spielen Ergonomie- und Sicherheitsaspekte wie Geräuscharmut, Schnelligkeit und Vermeidung von offen liegende Zahneingriffen oder Riemen, eine zunehmend wichtige Rolle.

Der Erfindung liegt somit die Aufgabe zugrunde, ein Antriebssystem bereit zu stellen, das hinsichtlich dieser Aspekte optimiert ist, und das insbesondere kompakt, konstruktiv einfach und in Bezug auf Sicherheit und niedrige Fertigungskosten optimiert ist.

### Allgemeine Beschreibung der Erfindung

Diese Aufgabe wird ausgehend von einem Antriebssystem der eingangs genannten Gattung erfindungsgemäß dadurch gelöst, dass es in einem kartesischen Koordinatensystem mit Nullpunkt in der Abtriebsachse eine Baulänge entlang einer ersten Hauptachse, eine Baubreite entlang einer zweiten Hauptachse und eine Bautiefe entlang einer dritten, der Abtriebsachse entsprechenden Hauptachse aufweist, und dass das Untersetzungsgetriebe ein mit dem Planetengetriebe gekuppeltes Schneckengetriebe aufweist, das eine in einer Antriebsachse drehende Antriebsschnecke umfasst, die mit einem koaxial zur Abtriebsachse drehenden Schneckenrad kämmt.

Das Untersetzungsgetriebe des erfindungsgemäßen Antriebssystems weist ein Getriebe mit zwei ineinander greifenden Getriebestufen auf, von denen eine ein Planetengetriebe ist, über das der Abtrieb auf das Wickelelement erfolgt. Die andere Getriebestufe ist ein mit dem Planetengetriebe gekuppeltes Schneckengetriebe, wobei das Schneckenrad um die Abtriebsachse rotiert. Im einfachsten Fall rotiert die Antriebsschnecke in der Antriebsachse, und greift direkt oder über das Schneckenrad auf das Sonnenrad des Planetengetriebes ein. Dadurch ergibt sich eine winkelige Anordnung der Getriebestufen, die eine besonders kompakte Bauform ermöglicht. Der Einsatz eines Schneckengetriebes anstelle des aus dem Stand der Technik bekannten Kegelrades hat mehrere Vorteile.
- Die mit dem Schneckenrad zusammenwirkende Antriebsschnecke übt geringe Radialkräfte auf den Motor auf.
- Die Antriebsschnecke ermöglicht im Zusammenspiel mit einem großen Schneckenrad ein hohes Untersetzungsverhältnis von über 100:1.
- Zudem ist das Schneckengetriebe selbsthemmend, so dass auf besondere Maßnahmen zur Halterung des Rollladenpanzers bei Stromausfall verzichtet werden kann.

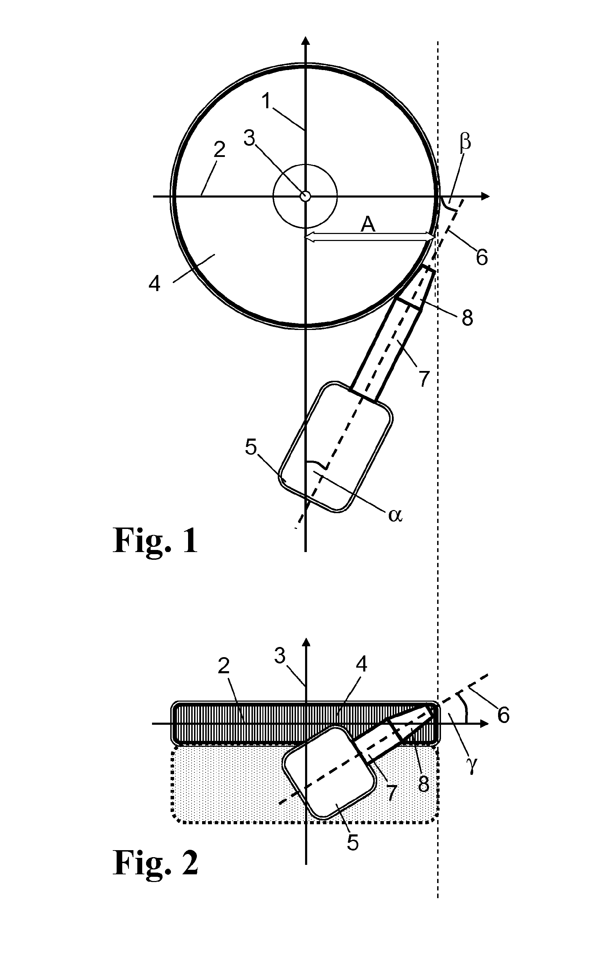

Die oben genannten Hauptachsen stehen senkrecht aufeinander. Zur Erläuterung der Hauptachsen-Verläufe zeigt **Figur 1** schematisch eine Draufsicht (Vertikalprojektion) auf ein Schneckenrad in Richtung der dritten Hauptachse 3 (senkrecht zur Blattebene). Zu erkennen sind die erste Hauptachse 1, die zweite Hauptachse 2, das Schneckenrad 4, ein Motor 5 sowie eine sich in Richtung der Antriebsachse 6 erstreckende Schneckenwelle 7 mit einer Antriebsschnecke 8 mit kegelförmiger Verzahnung. **Figur 2** zeigt schematisch eine Seitenansicht in Richtung der ersten Hauptachse.

Insbesondere im Hinblick auf eine flache Bauweise des Getriebes hat sich eine Ausführungsform des Antriebssystems bewährt, bei der das Schneckenrad in einer Schneckenradebene um die Abtriebsachse dreht, wobei die Antriebsachse in einem zur Schneckenradebene geneigten Winkel verläuft.

Üblicherweise verläuft beim Schneckenradgetriebe die Achse der Antriebsschnecke genau senkrecht zur Achse des Schneckenrades, wobei die Achse der Schnecke etwa in der Mitte des Zahnkranzes des Schneckenrades verläuft. Die Verzahnung des Schneckenrades weist in diesem Falle eine Schrägstellung (Schrägverzahnung) auf, wobei diese Schrägstellung der Schrägstellung der Schneckenschraube im Eingriffsbereich der Verzahnung entspricht.

Im erst genannten Fall erstreckt sich das Motorgehäuse in der Regel sowohl oberhalb als auch unterhalb der Schneckenradebene, so dass die seitliche Projektion des Schneckenrades vom Motorgehäuse beidseitig überragt wird. Zudem ist der Abstand zwischen dem Eingriffspunkt der Schnecke und dem Motorgroß, wenn das Schneckenrad einen großen Durchmesser hat, wodurch eine zweifache Lagerung der Schnecke unumgänglich ist.

Im Gegensatz dazu ist gemäß der Erfindung vorgesehen, dass die Antriebsachse - und damit die Schneckenwelle - gegenüber der Schneckenradebene um einen Winkel ungleich 90 Grad und ungleich des Verzahnungswinkels verkippt ist. Die Antriebsache verläuft dabei nicht senkrecht zur Abtriebsachse, sondern windschief zu dieser. Zur Erläuterung wird auf **Figur 2** verwiesen, in der der Winkel zwischen der Schneckenradebene und der Antriebsachse als Winkel γ eingezeichnet ist.

Diese Abwinkelung der Antriebsachse ermöglicht eine Anordnung des Motorgehäuses, bei der dieses vollständig unterhalb (oder wahlweise oberhalb) der Schneckenradebene zu liegen kommt. In der seitlichen Projektion des Schneckenrades - wie in Figur 2 gezeigt - wird dieses dann nur noch auf einer Flachseite vom Motorgehäuse überragt. Unter Berücksichtigung dessen, dass das Antriebssystem außer Antriebsschnecke und Schneckenrad auch noch das Planetengetriebe und das Wickelelement umfasst, und somit eine gewisse Erstreckung in Richtung der dritten Hauptachse hat, ermöglicht dies eine Anordnung des Motors, bei der dieser von einer seitlichen Projektion des Antriebssystems vollkommen überdeckt ist, also vollständig "hinter dem Getriebe" oder "hinter Getriebe und Wickelelement" angeordnet ist, wie schematisch durch die punktierte Fläche in Figur 2 dargestellt.

Vorzugsweise schließt die Antriebsachse mit der Schneckenradebene dabei einen Winkel im Bereich von 10 bis 30° ein.

Bei einem Winkel γ von weniger als 10° macht sich die Platzersparnis durch die Schrägstellung nicht wesentlich bemerkbar und bei einer Schrägstellung mit einem Winkel von mehr als 30° ergibt sich ein zunehmend ungünstiger Kraftfluss von der Antriebsschnecke auf das Schneckenrad.

Eine weitere Verringerung der Bauhöhe wird bei einer Ausführungsform des erfindungsgemäßen Antriebssystems erreicht, bei der die Antriebsachse in einer Vertikalprojektion auf die Schneckenradebene mit der ersten Hauptachse und mit der zweiten Hauptachse einen Winkel kleiner 90 Grad einschließt, und dass die Antriebsschnecke mit kegeliger Verzahnung ausgeführt ist.

Zur Erläuterung wird erneut auf Figur 1 verwiesen, die schematisch eine Vertikalprojektion auf eine Schneckenradebene in Richtung der dritten Hauptachse 3 (senkrecht zur Blattebene) zeigt. Die Antriebsachse 6 schließt mit der ersten Hauptachse 1 einen Winkel α und mit der zweiten Hauptachse 2 einen Winkel β ein, die beide kleiner 90 Grad sind. Diese Anordnung der Antriebsachse in Bezug auf die erste und zweite Hauptachse wird im Folgenden auch kurz als "windschiefe Anordnung" bezeichnet.

Bei üblichen Schneckenantrieben mit senkrecht zur zweiten Hauptachse verlaufender Antriebswelle erstrecken sich Antriebsschnecke und Motorgehäuse seitlich zum Schneckenrad und bauen dadurch in der Schneckenradebene auf zwei Seiten zusätzlich auf. Bei der windschiefen Anordnung kann zumindest das Motorgehäuse in Richtung auf die erste Hauptachse hinter das Schneckenrad zurückgezogen werden, so dass dann das Motorgehäuse nur noch seitlich in Richtung der ersten Hauptachse aufbaut. Diese ermöglicht eine kompaktere Bauweise in Richtung der zweiten Hauptachse.

Davon abgesehen ergibt die kegelige Ausführung der Antriebsschnecken-Verzahnung in Verbindung mit der windschiefen Abtriebsachse ein tieferer Eingriff und eine bessere Kraftübertragung auf das Schneckenrad.

Des Weiteren erlaubt insbesondere die kegelige Ausgestaltung der Antriebsschnecke eine kurze Distanz zwischen Motorflansch und Eingriffsstelle, so dass auf eine zweite Lagerung der Antriebswelle verzichtet werden kann. Eine zweite Lagerung der Antriebswelle würde wiederum zusätzlichen Bauraum beanspruchen. Daher ist bei einer besonders bevorzugten Ausführungsform des erfindungsgemäßen Antriebssystems vorgesehen, dass die Antriebsschnecke einseitig gelagert ist.

Im Idealfall tragen weder der Motor (beziehungsweise ein Motorgehäuse) noch die Antriebsschnecke nicht in Richtung der zweiten Hauptachse auf, wie dies ist in Figur 1 schematisch gezeigt ist.

Im Hinblick darauf ist eine Ausführungsform des Antriebssystems bevorzugt, bei der sich Antriebsschnecke und Schneckenrad in einem Eingriffspunkt berühren, der in der Vertikalprojektion auf die Schneckenradebene soweit unterhalb der zweiten Hauptachse liegt, dass der Abstand "A" zwischen der ersten Hauptachse und einem Außenrand der Antriebsschnecke kleiner ist als die halbe Baubreite. Der Abstand "A" ist anhand Figur 1 näher erläutert. Die Abmessung des Antriebssystems in Richtung der zweiten Hauptachse (Breitenabmessung) wird somit nicht durch den Motor und die Antriebsschnecke bestimmt.

Vorzugsweise sind das Schneckenrad und das Sonnenrad starr miteinander verbunden, vorzugsweise einstückig ausgebildet.

Dabei rotiert das Schneckenrad durch die mit ihr kämmende Antriebsschnecke gleichzeitig mit dem Sonnenrad. Eine besonders einfache Konstruktion ergibt sich, wenn das Sonnenrad und das Schneckenrad einstückig ausgebildet sind. Derartige Bauteile lassen sich besonders einfach und kostengünstig fertigen, beispielsweise durch Spritzgießen und dergleichen als so genanntes "Urformteil".

Insbesondere im Hinblick auf eine einfache und kostengünstige Konstruktion des Antriebssystems hat es sich bewährt, wenn die Planetenräder auf einem Planetenträger aufgenommen sind, der in der Abtriebsachse beidendig mit Zapfen versehen ist, von denen einer als Drehachse für das Hohlrad und der andere als Drehachse für das Sonnenrad dient.

Der Planetenträger bildet somit gleichzeitig die Drehachsen für das Hohlrad (und ein etwaiges mit dem Hohlrad verbundenes Wickelelement) und für das Sonnenrad, wodurch sich eine einfache und kompakte Konstruktion ergibt. Vorzugsweise ist dabei der Planetenträger drehfest gelagert, also beispielsweise die in das Hohlrad hineinragende Drehachse an ihrem Ende mit einem Gehäuse verbunden, vorzugsweise verzapft.

Weiterhin hat es sich als günstig erwiesen, wenn der Planetenträger außerdem Drehachsen für die Planetenräder aufweist, die in Bezug auf die Drehachse des Hohlrades gekröpft sind, und dass der Planetenträger und die Drehachsen für Hohlrad, Sonnenrad und Planetenräder einstückig ausgebildet sind.

Die Drehachsen für Hohlrad, Sonnenrad und ein etwaiges Schneckenrad verlaufen koaxial zueinander, wobei der Planetenträger die Drehachsen für das Hohlrad, für das Sonnenrad und ein etwaiges mit dem Sonnenrad verbundenes Schneckenrad und die Drehachsen für die Planetenräder zur Verfügung stellt. Er ist vorteilhafterweise aus einem Teil gefertigt, beispielsweise als Metall-Spritzgussteil, und trägt insoweit auch zu einer einfachen und kostengünstigen Konstruktion des Untersetzungsgetriebes bei.

Es hat sich bewährt, wenn das Schneckenrad einen Außendurchmesser im Bereich von 60 bis 120 mm, vorzugsweise im Bereich von 80 mm bis 100 mm aufweist.

Je größer das Schneckenrad ist, umso größer ist die mögliche Untersetzung durch die Getriebeverbindung mit der Antriebsschnecke. Bei Schneckenrad-Durchmessern von weniger als 60 mm ergibt sich diesbezüglich ein geringer Beitrag. Andererseits wird die maximale Größe durch die Vorgabe der Abmessung in Richtung der zweiten Hauptachse (Breitenabmessung) bestimmt. So erfordert beispielsweise eine Einpassung in den kleinsten Standard-Einbaukästen für Rollladengurte mit dem Typenmaß 105 mm den Einsatz eines Schneckenrads, das deutlich kleiner als 105 mm ist, beispielsweise 90 mm.

Bei einer besonders bevorzugten Ausführungsform des erfindungsgemäßen Antriebssystems ist das Schneckenrad als Hohlrad mit ringförmigem Hohlraum ausgebildet ist, in den hinein sich das innenverzahnte Hohlrad erstreckt.

Das Schneckenrad ist hierbei als außenverzahntes Hohlrad mit der am Außenumfang umlaufenden Verzahnung für den Eingriff mit der Antriebsschnecke ausgebildet. Die Außenverzahnung ist über Stege oder eine durchgehende Ringfläche mit der Drehachse verbunden. Wesentlich ist, dass das innenverzahnte Hohlrad des Planetengetriebes sich in den Hohlraum des Schneckenrades erstreckt. Hierfür hat das innenverzahnte Hohlrad einen Außendurchmesser, der kleiner ist als der Innendurchmesser des Schneckenrades. Dadurch, dass das innenverzahnte Hohlrad vollständig oder teilweise in das Schneckenrad eintaucht, ergibt sich eine besonders kompakte Bauweise in Richtung der dritten Hauptachse (Tiefenabmessung).

Im Hinblick auf ein möglichst großes Untersetzungsverhältnis ist das innen verzahnte Hohlrad des Planetengetriebes möglichst groß ausgebildet und im Idealfall gerade so groß, dass es in den Hohlraum des Schneckenrades passt und gegebenenfalls darin gerade noch rotieren kann. In dem Zusammenhang hat es sich bewährt, wenn der ringförmige Hohlraum des Schneckenrades einen Innendurchmesser ID_{S} hat, und dass das Hohlrad einen Außendurchmesser AD_{H} hat, wobei gilt: AD_{H} ≥ ID_{S} -10 mm.

Das bedeutet, der Innendurchmesser des Schneckenrad-Hohlraums und der Au-βendurchmesser des innen verzahnten Hohlrades sind möglichst genau aufeinander angepasst. Ein Sicherheitsspalt ist erforderlich, um ein Verklemmen bei Eindringen kleiner Teilchen zu vermeiden. Sicherheitsspalte mit Spaltweiten von mehr als 5 mm sind nicht erforderlich.

Bei einer besonders bevorzugten Ausführungsform des erfindungsgemäßen Antriebssystem ist das Wickelelement als Gurtwickelhaspel zum Auf- und Abwickeln eines Rollladen-, Jalousien- oder Markisengurts oder Zugbandes ausgeführt ist, wobei Motor, Untersetzungsgetriebe und Gurtwickelhaspel in einem gemeinsamen Gehäuse angeordnet sind.

Der Gurtwickler ist sowohl für eine Aufputzmontage als auch für Unterputzmontage geeignet. Für die Aufputzmontage weist das Gehäuse eine Einlauföffnung für den Gurt auf, so dass das Antriebssystem besonders geräuscharm ist. Für die Unterputzmontage genügt auch ein Gehäuse, das offen ist oder lediglich einen Rahmen bildet, beispielsweise in Form von beidseitigen Lagerplatinen. Bei Unterputzmontage muss das Gehäuse in eine Mauerwerksausnehmung passen, in die ein Einbaukasten mit genormten Einbaumaßen eingesetzt ist.

Wesentlich ist, dass das Gehäuse neben dem Elektromotor und dem Untersetzungsgetriebe auch das Wickelelement umfasst, das in diesem Fall als Gurtwickelhaspel zum Auf- und Abwickeln des Gurts bzw. des Zugbandes einer Markise und dergleichen ausgelegt ist. Das erfindungsgemäße Antriebssystem ermöglicht eine besonders kompakte Bauweise, so dass es in alle Standard-Einbaukästen für Rollladengurte mit den Typenmaßen 105 mm, 135 mm, 160 mm und 185 mm passt und insbesondere auch im kleinsten dieser Einbaukasten untergebracht werden kann.

Bei einer besonders bevorzugten Ausführungsform des Gurtwicklers ist vorgesehen, dass die Gurtwickelhaspel und das Hohlrad starr miteinander verbunden, vorzugsweise einstückig ausgebildet sind.

Das innen verzahnte Hohlrad des Planetengetriebes und die Gurtwickelhaspel drehen hierbei um die gemeinsame Abtriebsachse und sie sind vorzugsweise in einem Stück gefertigt, beispielsweise durch Spritzverfahren, wodurch sich eine besonders einfache und kompakte Konstruktion des Gurtwicklers ergibt.

Es hat sich besonders bewährt, wenn das Gehäuse eine Breite von maximal 40 mm, vorzugsweise maximal 36 mm hat, wobei mindestens einer der beidendigen Zapfen des Planetenträgers durch Formschluss, vorzugsweise mittels Verzahnung drehmomentsteif am Gehäuse gelagert ist.

Durch ein flaches Gehäuse von maximal 40 mm erhält der Gurtwickler bei der Aufputzmontage eine gefällige Anmutung und bei Gehäusebreiten von maximal 36 mm passt er bei Unterputzmontage in alle Standard-Gurtkästen. Der Planetenträger erstreckt sich dabei - in Richtung der zweiten Hauptachse - von einer Flachseite des Gehäuses bis zur gegenüberliegenden Flachseite. Er ist am Gehäuse verdrehfest gelagert und dient als Drehachse für das Sonnenrad und das damit verbundene Schneckenrad und als Drehachse für das innen verzahnte Hohlrad und die damit verbundene Gurtwickelhaspel. Gleichzeitig trägt er zur Stabilisierung des Gehäuses bei. Die den Planetenträger tragende Achse der Gurtwickelhaspel ist dabei durch Formschluss vorzugsweise mittels Verzahnung drehmomentensteif am Gehäuse gelagert.

Bei einer vorteilhaften Modifikation des erfindungsgemäßen Antriebssystems umschließt das Gehäuse zur Aufnahme einer Wicklung des Gurts einen Wickelraum mit einer Breite von mindestens 23 mm, wobei Einrastmittel zum Einsetzen einer Leiste vorgesehen sind, durch die der Wickelraum in einen Teil-Wickelraum mit geringerer Breite verengt werden kann.

Hierbei wird innerhalb des Gehäuses ein Wickelraum für die Aufnahme des Gurts zur Verfügung gestellt, der geeignet ist, maximale Gurtbreiten bis etwa 23 mm aufzunehmen, was der maximalen Standardbreite entspricht. Bei einem schmaleren Gurt besteht bei einem derart breiten Wickelraum jedoch die Gefahr, dass sich dieser nicht ordnungsgemäß übereinander aufwickelt, sondern den zur Verfügung stehenden, breiten Wickelraum unregelmäßig füllt, was beim Abwickeln zu Verschlingungen führen kann. Um dies zu verhindern, ist die Breite des Aufwickelraums variierbar und an die tatsächliche Gurtbreite anpassbar. Dies geschieht dadurch, dass die Breite des Aufwickelraums durch Einsetzen einer Längsleiste verkleinert werden kann.

Eine andere, gleichermaßen bevorzugte Ausführungsform des erfindungsgemäßen Antriebssystems ist dadurch gekennzeichnet, dass das Wickelelement als Adapterzapfen für eine Wickelwalze zum Auf- und Abwickeln eines Rollladenpanzers oder eines Jalousien- oder Markisenbehangs ausgeführt und mit dem innen verzahnten Hohlrad des Planetengetriebes drehmomentsteif verbunden ist.

Hierbei dient das Antriebssystem als "Direktantrieb" für die Wickelwalze zum Aufwickeln eines aufwickelbaren Behangs, wie eines Vorhangs, einer Jalousie, einer Markise, eines Rollladens, eines Rolltores oder dergleichen, wobei das Antriebssystem seitlich an der Wickelwalze angreift und diese direkt antreibt. Das innen verzahnte Hohlrad des Planetengetriebes ist hierbei mit dem Adapterzapfen und dieser mit der Wickelwalze direkt oder über ein oder mehrere Zwischenelemente drehfest verbunden.

Die besonders kompakte Bauform des erfindungsgemäßen Antriebssystems ermöglicht die Unterbringung auch in engen Räumen, wie beispielsweise dem seitlich zur Wickelwalze verbleibenden Raum in einem Vorbau- oder Aufbaurollladenkasten.

Motor und Untersetzungsgetriebe sind beispielsweise in einem Gehäuse angeordnet, das an einem stirnseitigen Ende der Wickelwalze drehfest in einem Rahmen gelagert ist, wobei die den Planetenträger tragende Achse des Hohlrades beidseitig durch Formschluss, vorzugsweise mittels Verzahnung, drehmomentsteif im Gehäuse gelagert ist.

Die Achse des Planetenträgers trägt zur Stabilisierung des Gehäuses bei. Ein flaches Gehäuse mit einer Breite von beispielsweise maximal 40 mm kann auf einer oder beiden Seiten einer Wickelwalze in einem Standard-Rollladenkasten angeordnet werden.

Das Antriebssystem ist mit einer Einrichtung zur Positionserfassung und Wegmessung ausgestattet, bei dem der Motor eine Motorwelle aufweist, die an ihrer der Antriebsschnecke abgewandten Seite einen Magnethalter mit einem versetzt zur Motorwelle rotierbaren und als Hall-Generator wirkenden Magneten trägt, und das Gehäuse eine Gehäuseöffnung aufweist, die von einer Abdeckung verschließbar ist, welche eine elektronische Steuerplatine mit einem als SMD-Bauteil ausgeführten Hallsensor enthält, der mit dem Hall-Generator zusammenwirkt.

Der Magnet ist dabei vorzugsweise außermittig in einem Magnetträger eingesetzt, der auf der Motorwelle fixiert ist. Um Unwucht zu vermeiden, enthält der Magnetträger gegenüberliegend zum Magneten ein Gegengewicht. Infolge der kompakten Bauweise des Antriebssystems gelangt die Abdeckung mitsamt der Steuerplatine und dem Hall-Sensor in unmittelbare Nähe zum Hallgenerator. Dies ermöglicht eine Ausführung des Hall-Sensors als einfaches SMD-Bauteil auf der Steuerplatine.

### Ausführungsbeispiel

Ausführungsbeispiele der Erfindung sind in der Zeichnung dargestellt und werden nachfolgend näher erläutert. In der Zeichnung zeigt im Einzelnen
- **Figur 1**: in schematischer Darstellung eine Anordnung aus Schneckenrad, Motor und Antriebsschnecke in einer Draufsicht auf das Schneckenrad in Richtung seiner Drehachse,
- **Figur 2**: in schematischer Darstellung die Anordnung von Figur 1 in einer Seitenansicht auf das Schneckenrad,
- **Figur 3a**: eine Ausführungsform eines Untersetzungsgetriebes für das erfindungsgemäßen Antriebssystem in einer Sprengdarstellung,
- **Figur 3b**: das Schneckenrad des Untersetzungsgetriebes von Fig. 3a in einer anderen Ansicht,
- **Figur 4**: einen Gurtwickler mit dem Untersetzungsgetriebe von Figur 3 mit Gehäuse und Motor in dreidimensionaler Ansicht,
- Figur 5: den Gurtwickler von Figur 4 in einer Draufsicht auf das Schneckenrad in Richtung der dritten Hauptachse (Tiefe),
- **Figur 6**: den Gurtwickler von Figur 4 in einer Seitenansicht auf das Schneckenrad in Richtung der ersten Hauptachse (Länge),
- **Figur 7**: den Gurtwickler von Figur 4 in einer Seitenansicht auf das Schneckenrad in Richtung der zweiten Hauptachse (Breite), und
- **Figur 8**: den Ausschnitt A aus Figur 5 mit zusätzlicher Gehäuseabdeckung in vergrößerter Darstellung.

Aus den schematischen Darstellungen von **Figur 1** und **Figur 2** sind die Lagen der senkrecht aufeinander stehenden Hauptachsen 1, 2, 3 sowie der in Bezug auf die Hauptachsen 1, 2, 3 in allen Richtungen verkippte, windschiefe Verlauf der Antriebsachse 6 ersichtlich, wie weiter oben näher erläutert.

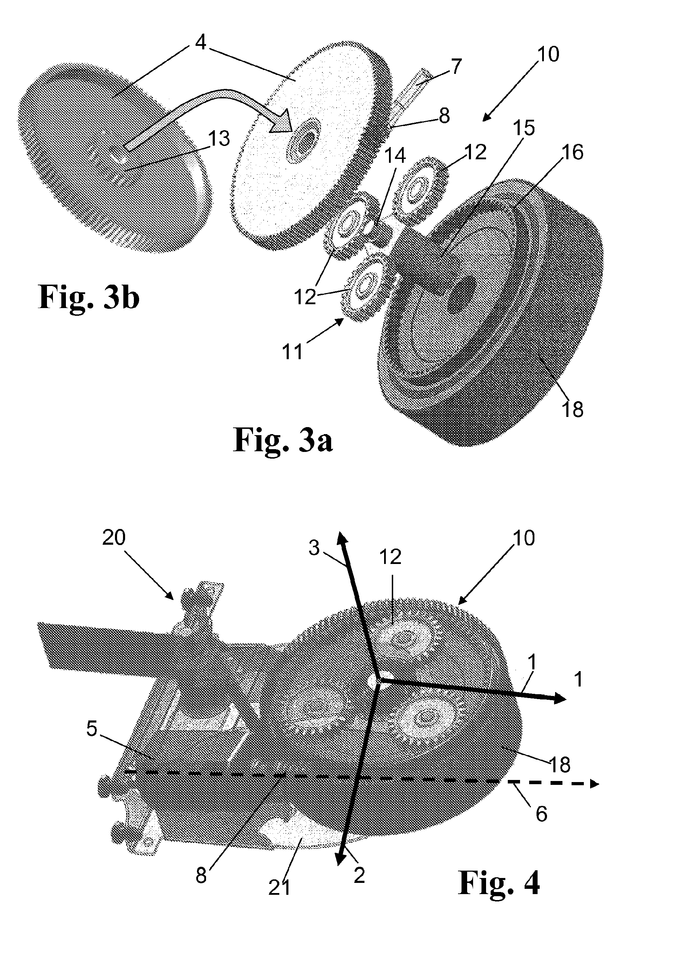

Sofern in den Figuren 3 bis 8 gleiche Bezugsziffern wie in den Figuren 1 und 2 verwendet werden, so sind damit identische oder äquivalente Bauteile des Antriebssystems bezeichnet.

Die dreidimensionale Sprengdarstellung von **Figur 3a** zeigt eine Ausführungsform des Untersetzungsgetriebes 10 mit Schneckenrad 4 und die mit dem Schneckenrad 4 in schräger, windschiefer Anstellung kämmende Antriebsschnecke 8, die eine kegelige Verzahnung aufweist. Das Schneckenrad 4 ist als außenverzahntes Hohlrad mit einem Außendurchmesser von 90 mm als Kunststoffspritzteil gefertigt und einstückig mit einem Sonnenrad 13 (siehe Figur 3b) verbunden.

Die Ansicht von Figur 3b auf das Schneckerad 4 zeigt, dass seine Ausbildung als Hohlrad und die einteilige Ausbildung mit dem Sonnenrad 13, das einen Teilkreisdurchmesser von 23 mm hat. Der Innendurchmesser des Schneckenrades 4 beträgt 84 mm.

Die Drehachse des Schneckenrades 4 wird von einem Zapfen 14 eines Planetenträgers 11 gebildet, der koaxial dazu an seinem gegenüberliegenden Ende einen weiteren Zapfen 15 aufweist, und der auf drei Armen die Drehachsen für drei Planetenräder 12 trägt. Diese greifen in das Sonnenrad 13 ein und rollen auf der Innenverzahnung eines Hohlrades 16 ab, das einen Teilkreisdurchmesser von 77 mm aufweist. Der oben erwähnte Zapfen 15 des Planetenträgers 11 dient als Drehachse für das Hohlrad 16 und ist an seinem Ende mit dem (in der Figur 3a) nicht dargestellten Gehäuse drehfest gelagert. Der Planetenträger 11 ist als einstückiges Zink-Druckgussteil gefertigt (alternativ als Aluminium-Druckgussteil). Die Planetenräder haben einen Außendurchmesser von 27 mm und sie bestehen aus Kunststoff.

Das innenverzahnte Hohlrad 16 ist einteilig mit einer Gurtwickelhaspel 18 verbunden, das in der Darstellung von Figur 3a eine vollständige Aufwicklung eines Gurts trägt. Im Zusammenbau wird das innenverzahnte Hohlrad 16 vom Schneckenrad 4 vollständig übergriffen, so dass es innerhalb des Hohlraums des Schneckenrades 4 verschwindet. Auch das Hohlrad 16 mitsamt der Gurtwickelhaspel 18 ist als Kunststoffspritzteil gefertigt.

Die dreidimensionale Zusammenbauzeichnung von **Figur 4** zeigt einen Gurtwickler 20 zum Aufwickeln eines Rollladengurts, wobei der Elektromotor 5 und das Untersetzungsgetriebe 10 in einem Gehäuse 21. Das Gehäuse 21 ist einteilig aus einem vorverzinkten Metallband gestanzt und gebogen, und aus Darstellungsgründen teilweise im Schnitt dargestellt oder nur angedeutet. Zur Erläuterung der Richtungen sind außerdem die Hauptachsen 1, 2 und 3 sowie die Richtung der Antriebsachse 6 eingezeichnet. Die dritte Hauptachse 3 entspricht gleichzeitig der Abtriebsachse.

Der Elektromotor 5 ist an das Gehäuse 21 angeflanscht, und treibt die windschief in Richtung der Antriebsachse 6 in das Gehäuse 21 ragende Antriebsschnecke 8 an, die mit dem Schneckenrad 4 kämmt. Damit Motor 5 und Schnecke 7 wenig Platz im Gehäuse 21 einnehmen und seitlich (in Richtung der Hauptachse 2) nicht zusätzlich auftragen, verläuft die Antriebsachse 6 zur Schneckenradebene in einem Winkel γ (siehe Figur 2) von 15 Grad, und sie schließt außerdem mit der ersten Hauptachse 1 einen Winkel α (siehe Figur 1) von 9 Grad ein. Außerdem liegt der Eingriffspunkt zwischen Antriebsschnecke 8 und Schneckenrad 4 nicht im Schnittpunkt mit der zweiten Hauptachse, sondern soweit in Richtung erster Hauptachse 1 nach hinten verschoben, dass der Motor 5 und die Antriebsschnecke soweit hinter das Schneckenrad 4 zurückgezogen sind, das sie in Richtung der zweiten Hauptachse 2 nicht zusätzlich auftragen. Die Abmessung des Gurtwicklers 20 in Richtung der zweiten Hauptachse (Breitenabmessung) wird somit nicht durch den Motor 6 und die Antriebsschnecke 8 bestimmt.

Zum Auf- oder Abwickeln des Rollladenpanzers beziehungsweise des Rollladengurts, wird der Elektromotor 5 eingeschaltet, der über die Antriebsschnecke 8 das Schneckenrad 4 dreht. Das drehfest mit ihm verbundene Sonnenrad 13 treibt die Planetenräder 12 an, die sich ortfest im Hohlrad 16 abwälzen, das sich dadurch zusammen mit der Gurtwickelhaspel um die Abtriebsachse 3 dreht.

Durch das Schneckengetriebe 4, 7, 8 ergibt sich ein Untersetzungsverhältnis von 1:111 und durch das Planetengetriebe 12-16 ein Untersetzungsverhältnis von 23:77 (=3,35). Beide Getriebestufen (Schneckengetriebe 4, 7, 8 beziehungsweise Planetengetriebe 12-16) sind auf engstem Raum kombiniert, so dass das Gehäuse 21 eine geringe Bauhöhe in Richtung der Abtriebachse 3 hat, vorzugsweise unter 37 mm. Durch die oben beschriebene windschiefe Anordnung und Schrägstellung von Motor 5 und Antriebsschnecke 8 ergibt sich auch eine geringe Abmessung in Richtung der beiden anderen Hauptachsen 1, 2. Der Antrieb ist somit kompakt ausgebildet und kann auch bei engen räumlichen Verhältnissen ohne Schwierigkeiten eingebaut werden wie beispielsweise in einen Gurtwickelkasten mit Öffnungsmaßen: 90 mm Höhe, 36 mm Breite. Die Wickelkapazität beträgt 4,5 m bei einer Gurtstärke von 1,3 mm.

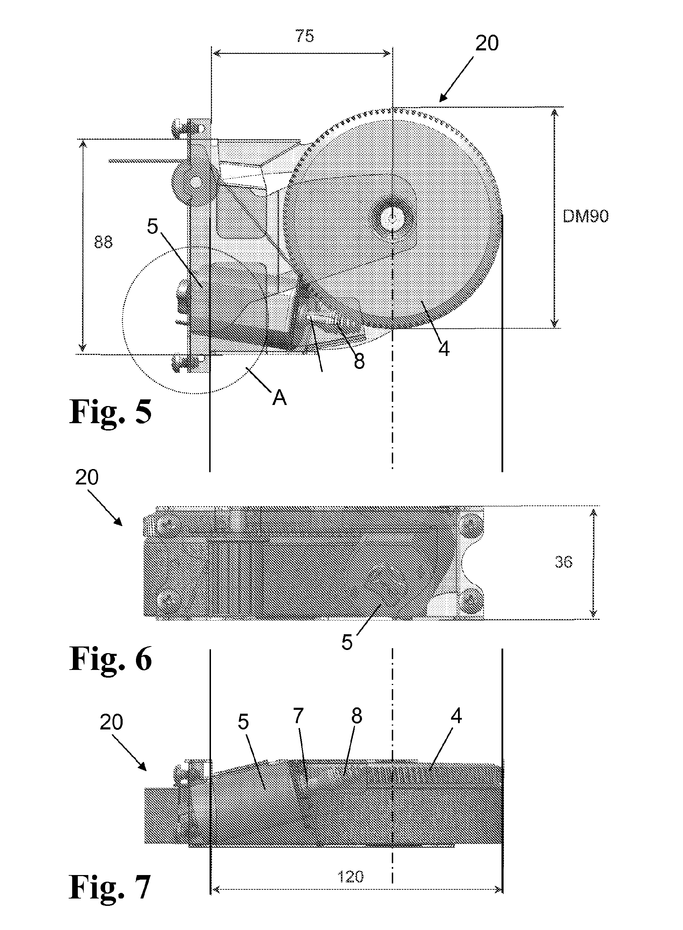

Die seitlichen Abmessungen des Gurtwicklers 20 gemäß Ausführungsbeispiel sowie die Anordnung von Motor 5 und Antriebsschnecke 8 zum Schneckenrad 4 sind aus den **Figuren 5 bis 7** ersichtlich.

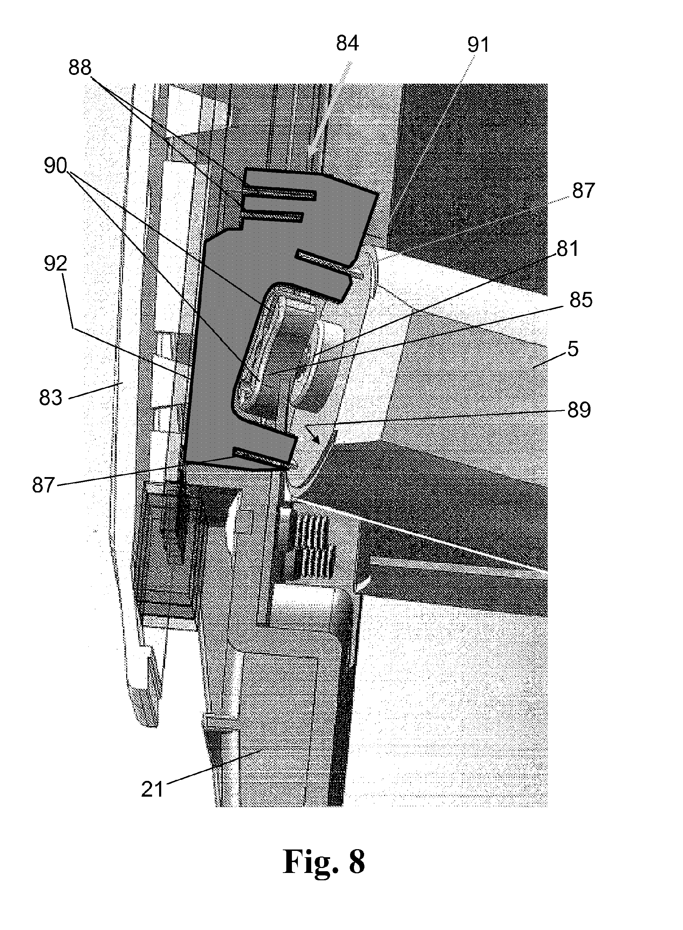

**Figur 8** zeigt das Detail A von Figur 5 in vergrößerter Darstellung. Der schräg gestellte Motor 5 weist auf seiner der Antriebsschnecke (nicht dargestellt) abgewandten Seite eine Motorwelle 81 auf, auf der ein Magnetträger 85 montiert ist. Der Magnetträger 85 enthält außermittig zwei Hohlräume, in die jeweils ein Magnet 90 (Ferritkern) eingesetzt ist. Der Magnetträger 85 mit den versetzt zur Motorwelle 81 drehenden Magneten 90 wirkt als Hall-Generator.

Der dazugehörige Hall-Sensor ist auf einer Platine (nicht dargestellt) in unmittelbarer Nähe des Magnetträgers 85 untergebracht, die in einer Gehäuseabdeckung 83 fixiert ist. Der Hall-Sensor ist auf der Platine als SMD-Bauteil ausgeführt und dient zur Positionserfassung und Wegmessung für den ab- bzw. aufzuwickelnden Behang.

Die elektrische Verbindung zwischen dem Motor 5 und der Abdeckung 83 erfolgt über eine Steckverbindung, die als wesentliches Bauteil eine mechanische Zusatzplatine 84 umfasst. Die Zusatzplatine 84 dient außerdem zum Ausgleich der Schrägstellung des Motors 5 und ist zu diesem Zweck mit zwei gegenüberliegenden Auflagekanten 91,92 versehen, die in dem der Schrägstellung des Motors 5 entsprechendem Winkel zueinander verlaufen. Die auf der Motor-Stirnseite 89 aufliegende Auflagekante 91 ist mit Schlitzen zur Aufnahme der Anschlussfahnen 87 des Motors versehen. Die gegenüberliegende, an der Abdeckung 83 anliegende Auflagekante 92 ist mit schlitzförmigen Aufnahmen 88 zur Aufnahme von Kontaktstiften versehen, die an der Steuerplatine in der Abdeckung 83 vorgesehen sind. Die schlitzförmigen Aufnahmen 8 verlaufen dabei exakt horizontal (in der Orientierung des Gurtwicklers gemäß Figur 8), so dass die elektrische Verbindung zwischen schlitzförmigen Aufnahmen 88 und Kontaktstiften durch ein geradliniges Aufsetzen der Abdeckung 83 realisiert werden kann. Durch das drehmomentstarke zweistufige Getriebe mit einer Getriebeuntersetzung von typischerweise 1:372 ist er für hohe Drehmomente an der Wickelhaspel von bis zu 6 Nm ausgelegt.

Der Gurtwickler besteht nur aus wenigen Bauteilen und lässt sich kostengünstig fertigen. Er ist als Aufputz- und Unterputzausführung geeignet und er passt in alle gängigen Gurtwicklerkästen, insbesondere auch in solche mit einer 90 mm hohen Öffnung (Breitenabmessung in Richtung der zweiten Hauptachse 2). Der Einsatz eines großen Schneckenrades und die Verzahnungen aus kostengünstigen Materialien (Kunststoff) ergeben einen geräuscharmen Betrieb. Durch die Ausgestaltung der Achsen als Drehachsen des Planetenträgers 12 ist für das gesamte Getriebe nur ein einziges Achsenteil erforderlich, das gleichzeitig als aussteifende Verbindung des Gehäuses 21 im Bereich der Gurtwickelhaspel 18 dient. Die räumliche Anordnung von Motor 5 und kegeliger Schnecke 8 ermöglichen den Verzicht auf zusätzliche Lagerungen der Schnecke 8, wodurch sich ein Raumgewinn und ein Kostenvorteil ergeben. Die Radialkräfte auf den Motor 5 sind aufgrund des Schneckengetriebes 6, 8, 4 minimal und die Axialkräfte der Schnecke 8 gegen den Motor 5 können mit der Schnecke 8 gegen das Motorlager abgestützt werden. Die Axialkräfte der Schnecke 8 als Zug aus dem Motor 5 können mit einem rückseitig aufgepressten Teil, das auch andere Funktionen erfüllen kann, gegen das rückwärtige Motorlager abgestützt werden.

## Patentansprüche

1. Antriebssystem für Wickelelemente von Sonnenschutz- und Sicherungseinrichtungen, wie Rollläden, Markisen, Sonnenblenden, Rollgitter und dergleichen, wobei ein um eine Abtriebsachse (3) drehbares Wickelelement mit einem drehrichtungsumkehrbar betreibbaren elektrischen Motor (5) über ein Untersetzungsgetriebe (20) in Antriebsverbindung steht, welches ein Planetengetriebe mit Sonnenrad (13), innenverzahntem Hohlrad (16), dem die Abtriebsachse (3) zugeordnet ist und mindestens einem in das Sonnenrad (13) und das Hohlrad (16) eingreifenden Planetenrad (12) umfasst, **dadurch gekennzeichnet, dass** es in einem kartesischen Koordinatensystem mit Nullpunkt in der Abtriebsachse (3) eine Baulänge entlang einer ersten Hauptachse (1), eine Baubreite entlang einer zweiten Hauptachse (2) und eine Bautiefe entlang einer dritten, der Abtriebsachse (3) entsprechenden Hauptachse (3) aufweist, und dass das Untersetzungsgetriebe (20) ein mit dem Planetengetriebe gekuppeltes Schneckengetriebe aufweist, das eine in einer Antriebsachse (6) drehende Antriebsschnecke (8) umfasst, die mit einem koaxial zur Abtriebsachse (3) drehenden Schneckenrad (4) kämmt.

2. Antriebssystem nach Anspruch 1, **dadurch gekennzeichnet, dass** das Schneckenrad (4) in einer Schneckenradebene um die Abtriebsachse (3) dreht, und dass die Antriebsachse (6) in einem zur Schneckenradebene geneigten Winkel (γ) verläuft.

3. Antriebssystem nach Anspruch 2, **dadurch gekennzeichnet, dass** die Antriebsachse (6) mit der Schneckenradebene einen Winkel (γ) im Bereich von 5 bis 30° einschließt.

4. Antriebssystem nach einem der vorhergehenden Ansprüche, **dadurch gekennzeichnet, dass** die Antriebsachse (6) in einer Vertikalprojektion auf die Schneckenradebene mit der ersten Hauptachse (1) und mit der zweiten Hauptachse (2) jeweils einen Winkel (α, β) kleiner 90 Grad einschließt, und dass die Antriebsschnecke (8) mit kegeliger Verzahnung ausgeführt ist.

5. Antriebssystem nach Anspruch 4, **dadurch gekennzeichnet, dass** sich Antriebsschnecke (8) und Schneckenrad (4) in einem Eingriffspunkt berühren, der in der Vertikalprojektion auf die Schneckenradebene unterhalb der zweiten Hauptachse (2) liegt, derart, dass der Abstand zwischen der ersten Hauptachse (1) und einem Außenrand der Antriebsschnecke kleiner ist als die halbe Baubreite.

6. Antriebssystem nach einem der vorhergehenden Ansprüche, **dadurch gekennzeichnet, dass** die Antriebsschnecke (8) einseitig gelagert ist.

7. Antriebssystem nach einem der vorhergehenden Ansprüche, **dadurch gekennzeichnet, dass** das Schneckenrad (4) und das Sonnenrad (13)starr miteinander verbunden, vorzugsweise einstückig ausgebildet sind.

8. Antriebssystem nach einem der vorhergehenden Ansprüche, **dadurch gekennzeichnet, dass** die Planetenräder (12) auf einem Planetenträger (11) aufgenommen sind, der in der Abtriebsachse (3) beidendig mit Zapfen (14;15) versehen ist, von denen einer als Drehachse für das Hohlrad (16) und der andere als Drehachse für das Sonnenrad (13) dient.

9. Antriebssystem nach einem der vorhergehenden Ansprüche, **dadurch gekennzeichnet, dass** das Schneckenrad (4) einen Außendurchmesser im Bereich von 60 bis 120 mm, vorzugsweise im Bereich von 80 mm bis 100 mm aufweist.

10. Antriebssystem nach einem der vorhergehenden Ansprüche, **dadurch gekennzeichnet, dass** das Schneckenrad (4) als Hohlrad mit ringförmigem Hohlraum ausgebildet ist, in den hinein sich das innenverzahnte Hohlrad (16) erstreckt, wobei der ringförmige Hohlraum einen Innendurchmesser ID_{S} hat, und dass das Hohlrad einen Außendurchmesser AD_{H} hat, wobei gilt: AD_{H} ≥ ID_{S} -10 mm.

11. Antriebssystem nach einem der vorhergehenden Ansprüche, **dadurch gekennzeichnet, dass** das Wickelelement als Gurtwickelhaspel zum Auf- und Abwickeln eines Rollladen-, Jalousien- oder Markisengurts ausgeführt ist, und dass Motor(5), Untersetzungsgetriebe (10) und Gurtwickelhaspel in einem gemeinsamen Gehäuse (21) angeordnet sind, wobei die Gurtwickelhaspel und das Hohlrad (16) starr miteinander verbunden, vorzugsweise einstückig ausgebildet sind.

12. Antriebssystem nach Anspruch 8 und Anspruch 11, **dadurch gekennzeichnet, dass** das Gehäuse (21)eine Breite von maximal 40 mm, vorzugsweise maximal 36 mm hat, und dass mindestens einer der beidendigen Zapfen (14; 16) des Planetenträgers (11) durch Formschluss, vorzugsweise mittels Verzahnung drehmomentsteif am Gehäuse (21) gelagert ist.

13. Antriebssystem nach Anspruch 12, **dadurch gekennzeichnet, dass** das Gehäuse (21) zur Aufnahme einer Wicklung (18) des Gurts einen Wickelraum mit einer Breite von mindestens 23 mm umschließt, wobei Einrastmittel zum Einsetzen einer Leiste vorgesehen sind, durch die der Wickelraum in einen Teil-Wickelraum mit geringerer Breite verengt werden kann.

14. Antriebssystem nach einem der Ansprüche 1 bis 10, **dadurch gekennzeichnet, dass** das Wickelelement als Adapterzapfen für eine Wickelwalze zum Auf- und Abwickeln eines Rollladenpanzers oder eines Jalousien- oder Markisenbehangs ausgeführt und mit dem innenverzahnten Hohlrad des Planetengetriebes drehmomentsteif verbunden ist.

15. Antriebssystem nach einem der vorhergehenden Ansprüche, **dadurch gekennzeichnet, dass** der Motor (5) eine Motorwelle (81) aufweist, die an ihrer der Antriebsschnecke abgewandten Seite einen Magnethalter (85) mit einem versetzt zur Motorwelle (81) rotierbaren und als Hall-Generator wirkenden Magneten (90) trägt, und dass das Gehäuse (21) eine Gehäuseöffnung aufweist, die von einer Abdeckung (83) verschließbar ist, welche eine elektronische Steuerplatine mit einem als SMD-Bauteil ausgeführten Hallsensor enthält, der mit dem Hall-Generator zusammenwirkt.
